# EUROPEAN PATENT SPECIFICATION

(11) **EP 3 144 786 B1**
(45) Date of publication and mention of the grant of the patent: **31.07.2019**
(21) Application number: 15856549.9
(22) Date of filing: 06.03.2015
(51) Int. Cl.: G06F 21/32, H04L 29/06, H04W 12/06, G06F 3/044, G06K 9/00

(54) **METHOD AND MOBILE TERMINAL FOR PROCESSING FINGERPRINT INPUT INFORMATION**
VERFAHREN UND MOBILES ENDGERÄT ZUR VERARBEITUNG VON FINGERABDRUCKEINGABEINFORMATIONEN
PROCÉDÉ ET TERMINAL MOBILE POUR TRAITER DES INFORMATIONS D'ENTRÉE D'EMPREINTES DIGITALES

(30) Priority: 07.11.2014 CN 201410623900
(43) Date of publication of application: 22.03.2017
(73) Proprietor: Shenzhen Goodix Technology Co., Ltd., Shenzhen, Guangdong, 518045 (CN)
(72) Inventor: HUNG, Chiu-po, Shenzhen Guangdong 518000 (CN)
(74) Representative: Würmser, Julian
(86) International application number: PCT/CN2015/073825
(87) International publication number: WO 2016/070533

(56) References cited:
- CN-A- 101 681 209
- CN-A- 102 929 461
- US-A1- 2004 132 490
- US-A1- 2008 316 181
- US-A1- 2009 027 351
- US-A1- 2013 036 462
- US-A1- 2013 294 660

## Description

### TECHNICAL FIELD

The present disclosure pertains to the field of fingerprint identification, and in particularly, to a method and a system for processing input fingerprint information, and a mobile terminal thereof.

### BACKGROUND

In modern life, people rely more and more on mobile phones, and are placing higher and higher requirements on convenience, responsiveness and security of the mobile phones.

For example, the mobile phones are currently provided with various applications (APPs), and some APPs are higher frequently used, for example, the photographing APP. Sometimes, we need to quickly start the photographing APP from a standby screen off state to take photos. In this case, a high requirement is placed on the convenience and responsiveness of startup of the photographing APP. Therefore, if such applications are started more quickly than usual, a better experience may be brought to users. In recent years, iPhone sets up the upsurge in the fingerprint identification technology in mobile terminals. At present, many mobile phone manufacturers are starting their deployment of products supporting fingerprint identification technology.

Chinese utility model patent, with publication No. CN203117990 U and entitled "MOBILE TERMINAL HAVING FINGERPRINT UNLOCKING FUNCTION", has disclosed a mobile terminal having a fingerprint unlocking function, which includes a touch control module and a panel. The panel includes an outer frame and a transparent touch panel embedded in an intermediate portion of the outer frame. The touch control module is electrically connected to the transparent touch panel. The mobile terminal further includes a fingerprint scanning camera arranged beneath the outer frame, and a fingerprint data processing module that is respectively electrically connected to the touch control module and the fingerprint scanning camera. The fingerprint data processing module is configured to receive a fingerprint unlocking touch instruction via the touch control module and the transparent touch panel, start the fingerprint scanning camera to collect fingerprint information of a finger touching the transparent touch panel, receive the collected fingerprint information and compare the collected fingerprint information with pre-stored authorized fingerprint information, and control the mobile terminal to be unlocked when it is determined that the collected fingerprint information is consistent with a fingerprint in the authorized fingerprint information. This utility model is low in design cost, reliable in security and simple in operation.

With the increasing requirements of users, the fingerprint technology is not constrained to such aspects as unlocking and the like. How to attain a more convenient, quicker and funny use experience is an innovation development trend for the fingerprint technology. In addition, modern people highly concerned about their privacies, and when the mobile phones have to be lent to others, some applications which are not desired to be used by others in the mobile phones may bring about unnecessary troubles or embarrassments.

Therefore, mobile phones that are improved in terms of convenience, responsiveness, security, privacy protection and the like would be more populated by consumers.

D1 (US2009/027351A1) discloses a system and method for using biometric images. In an embodiment, a plurality of biometric images belonging to an individual are scanned and associated with one or more functions. The user can cause different biometric images to be scanned so that different functions within the user interface can be actuated. Thus, a biometric sensor can be used to provide additional functionality as compared to system where a single biometric image is used to provide access.

### SUMMARY

A first technical problem to be solved by the present disclosure is to provide a method for processing input fingerprint information, in order to improve performance of convenience, quickness and privacy and the like of mobile terminals such as mobile phones.

The present disclosure is implemented by a method for processing input fingerprint information, wherein the method includes the following steps:
identifying, when scanning that fingerprint information is input, whether a fingerprint template matching with the input fingerprint information is presented in a fingerprint database, wherein the fingerprint database comprises a plurality of pre-registered fingerprint templates; and
performing, upon identifying that a fingerprint template matching with the fingerprint information is presented in the fingerprint database, a predetermined associated operation according to a combination of the fingerprint information and a holding manner of a current mobile terminal. Whether the holding manner of the mobile terminal is a lateral holding manner or a lengthways holding manner is determined according to information detected by an acceleration sensor or a gravity sensor of the mobile terminal.

The fingerprint identification step is performed in one of a screen on state, a standby screen off state, an unlocked state, and a locked state; when the fingerprint identification step is performed in the standby screen off state, in the operation execution step a screen is lit up first, and then the predetermined associated operation is performed according to the combination of the fingerprint information and the holding manner of the current mobile terminal.

Preferably, the predetermined associated operation includes, but not limited to, performing an application, a function, an interface, a style and a mode.

A second technical problem to be solved by the present disclosure is to provide a system for processing input fingerprint information, which includes:
a fingerprint database establishing module, configured to register fingerprint templates in a fingerprint database, and set a predetermined associated operation correlated with each fingerprint template;
a fingerprint information identifying module, configured to, when scanning fingerprint information is input, identify whether a fingerprint template matching with the fingerprint information is presented in the fingerprint database; and
an operation executing module, configured to, upon identifying that a fingerprint template matching with the fingerprint information is presented in the fingerprint database, perform the predetermined associated operation according to a combination of the fingerprint information and a holding manner of a current mobile terminal. Whether the holding manner of the mobile terminal is a lateral holding manner or a lengthways holding manner is determined according to information detected by an acceleration sensor or a gravity sensor of the mobile terminal.

The fingerprint identification step is performed in one of a screen on state, a standby screen off state, an unlocked state, and a locked state; when the fingerprint information identifying module performs fingerprint identifying operation in the standby screen off state, the operation executing module lights up a screen first, and then performs the predetermined associated operation according to the combination of the fingerprint information and the holding manner of the current mobile terminal.

Preferably, the predetermined associated operation includes, but not limited to, perform an application, a function, an interface, a style and a mode.

A third technical problem to be solved by the present disclosure is to provide a mobile terminal which includes the above system for processing input fingerprint information.

In the present disclosure, a plurality of fingerprints are pre-registered as fingerprint templates, and a predetermined associated operation is performed according to a combination of the fingerprint information and a holding manner of a current mobile terminal, for example, an application, a function, an interface, a style and a mode may be performed. In this way, no matter in a screen on state or a screen off state, the associated operation may be started, such that a user may experience more convenient and quicker services. In the present disclosure, since various application operations are all associated with specific fingerprint information, so the privacy is better protected.

### BRIEF DESCRIPTION OF THE DRAWINGS

FIG. 1 is a flowchart of a method for processing input fingerprint information according to an embodiment of the present disclosure; and
FIG. 2 is a structural principle diagram of a system for processing input fingerprint information according to an embodiment of the present disclosure.

### DETAILED DESCRIPTION

In order to make the objectives, technical solutions, and advantages of the present disclosure clearer, the present disclosure is further described in detail by reference to the embodiments and the drawings. It should be understood that the embodiments described here are only exemplary ones for illustrating the present disclosure, and are not intended to limit the present disclosure.

In the present disclosure, a plurality of fingerprints are pre-registered as fingerprint templates, and then a combination of each fingerprint template and a holding manner of a current mobile terminal is set to be correlated with a predetermined associated operation. The predetermined associated operation includes, but not limited to, perform an application, a function, an interface, a style and a mode.

After scanning that a user inputs fingerprint information, the input fingerprint information is matched with the fingerprint templates. If a matched fingerprint template is present, the predetermined associated operation is performed according to the combination of the fingerprint information and the holding manner of the current mobile terminal. Specifically, the technical solution according to the present disclosure may be applicable to mobile terminals supporting the fingerprint identification function, such as mobile phones, PDAs, iPads and the like.

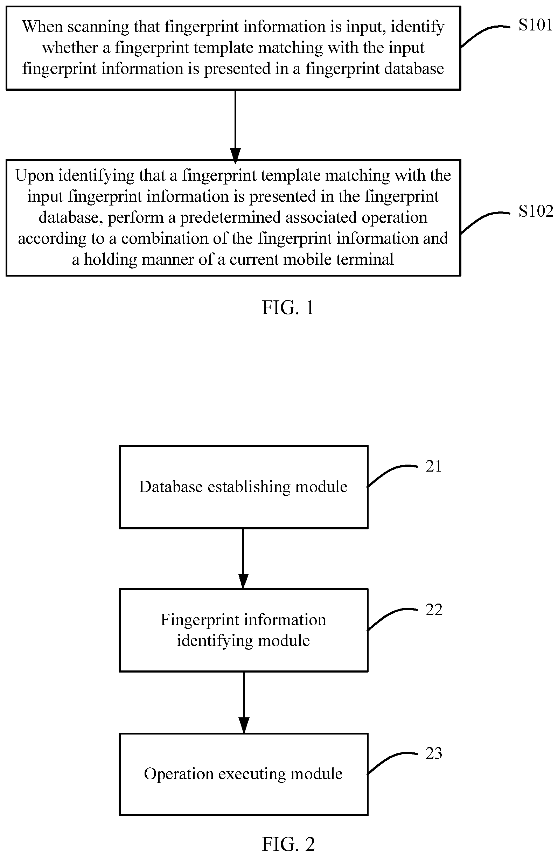

FIG. 1 is an implementation flowchart of a method for logging into a terminal based on fingerprint identification in a standby state according to an embodiment of the present disclosure, which is described in detail hereinafter.

Step S101: this step mainly identifies fingerprint information. Specifically, when scanning that fingerprint information is input, it identifies whether a fingerprint template matching with the input fingerprint information is presented in a fingerprint database of the mobile terminal.

In the embodiment of the present disclosure, a user needs to pre-register a plurality of fingerprint templates, each fingerprint template includes conventional fingerprint information; and moreover, an execution matter correlated with a combination of each fingerprint template and a holding manner of a current mobile terminal is set. This step may be performed in one of a screen on state, a standby screen off state, an unlocked state, and a locked state of the mobile terminal.

Step S102: This step mainly performs a specific operation. Specifically, upon identifying that a fingerprint template matching with the input fingerprint information is presented in the fingerprint database, a predetermined associated operation is performed according to a combination of the fingerprint information and the holding manner of the current mobile terminal.

The holding manner of the mobile terminal may be detected by using an acceleration sensor or a gravity sensor of the mobile terminal, and the predetermined associated operation may be performed in combination with the fingerprint information. For example, a registered fingerprint 1 corresponding to a finger 1 combined with a lateral holding manner (i.e., a landscape manner) of the mobile phone is correlated with a camera operation.

As described above, step S101 may be performed in the screen on state or the standby screen off state of the mobile terminal; and when this step is performed in the standby screen off state, in step S102, the screen needs to be lit up first and then the associated operation is performed.

Hereinafter, the specific principle of step S102 is described by taking an APP, a working mode application, a dialup application, an operating system, or the system subject application as an example.

With respect to the APP, upon identifying that a fingerprint template matching with the input fingerprint information is presented in the fingerprint database, a predetermined associated operation is performed according to a combination of the fingerprint information and a holding manner of a current mobile terminal. Even for a same fingerprint of the finger, different application can be set corresponding to different holding manners of the mobile terminal.

Upon a condition that a mobile phone is holding laterally and the mobile phone is in the screen off state, after a registered finger 1 touches the fingerprint sensor, the screen is directly lit on and then a photographing software is opened. A browser may be directly launched after a finger 2 touches the fingerprint sensor. It should be understood that this embodiment is not limited to the camera function. In one manner, the mobile terminal may enter different standby states, for example, a mute state, a vibration state and the like, or the mobile terminal may enter different operating systems according to the combination results, or enter different system interfaces, for example, a setting menu or a dialup panel.

When the mobile phone is in the screen on state, the photographing software is directly opened after the registered finger 1 touches the fingerprint sensor. A browser may be directly launched after the finger 2 touches the fingerprint sensor. Likewise, this embodiment is not limited to the camera function.

With respect to the dialup application, upon identifying that a matched fingerprint template is presented in the fingerprint database, a telephone number corresponding to a combination of the fingerprint template and the holding manner of the mobile terminal is dialed. For example, the touch identification of the finger 1 in the lateral holding manner corresponds to a telephone number 1; and the touch identification of the finger 2 in the lateral holding state corresponds to a telephone number 2. Where a call needs to be made, the user may touch the fingerprint sensor by using a corresponding finger in the lateral holding manner, and upon identification by the system, the correspondingly telephone number may be directly dialed through. Herein, the telephone number may be dialed when necessary, which is not limited to the scenario of whether the screen is off or on.

With respect to the operating system application, upon identifying that a matched fingerprint template is presented in the fingerprint database, an operating system or a ROM associated with the identified fingerprint template is started.

Some mobile phones are installed with different operating systems (or ROMs), and the user may set different fingerprints and holding manners to correspond to different operating systems (or ROMs). For example, the touch on the fingerprint sensor by the finger 1 in the lateral holding manner corresponds to a system 1 (or a ROM 1); and the touch on the fingerprint sensor by the finger 2 in the lateral holding manner corresponds to a system 2 (or a ROM 2). Alternatively, the touch on the fingerprint sensor by the finger 1 in the lateral holding manner corresponds to a system 1 (or a ROM 1); and the touch on the fingerprint sensor by the finger 1 in a lengthways holding manner (i.e., a portrait manner) corresponds to a system 2 (or a ROM 1). When the operating system (or the ROM) needs to be switched or an operating system (or a ROM) needs to be loaded, the user may select different operating systems (or ROMs) to start by using a different registered finger to touch the fingerprint sensor and using different holding manner. The above described operating system switching may be performed when necessary, which is not limited to the scenario of whether the screen of the device is off or on.

With respect to the system subject application, upon identifying that a matched fingerprint template is presented in the fingerprint database, the associated system subject information is loaded according to a combination of the fingerprint information and the holding manner of the current mobile terminal.

Some mobile phones are provided with different system subjects (different interface styles, background styles and the like). Further, the user may correlate different combination of fingerprint touches and holding manners of mobile terminal with different system subjects (interface styles, background styles and the like). For example, a touch on the fingerprint sensor by the finger 1 in a lateral holding state corresponds to a system subject 1 (or an interface style, a background style and the like), and a touch on the fingerprint sensor by the finger 1 in a lengthways holding state corresponds to a system subject 2 (or an interface style, a background style and the like). When the system subject (or the interface style, the background style and the like) needs to be switched or a system subject (or an interface style, a background style and the like) needs to be loaded, by using a finger to touch the fingerprint sensor, the mobile terminal may select different system subjects (or interface styles, background styles and the like) according to the holding manner of the current mobile terminal. Likewise, the system subject is switched anytime, which is not limited to the scenario of whether the screen of the device is off or on.

FIG. 2 is a structural principle diagram of a system for processing input fingerprint information according to an embodiment of the present disclosure. For ease of description, only the portions relevant to the present disclosure are illustrated. The system for processing input fingerprint information may be a software unit, a hardware unit or a software-hard hybrid unit that is built in a mobile terminal supporting the fingerprint identification function.

Referring to FIG. 2, the system for processing input fingerprint information includes a database establishing module 21, a fingerprint information identifying module 22 and an operating executing module 23.

The fingerprint database establishing module is configured to register fingerprint templates in a fingerprint database, and set a predetermined associated operation correlated with a combination of each fingerprint template and a holding manner of a current mobile terminal;
the fingerprint information identifying module 22 is configured to, when scanning that fingerprint information is input, identifying whether a fingerprint template matching with the input fingerprint information is presented in the fingerprint database; and
the operation executing module 23 is configured to, upon identifying that a fingerprint template matching with the input fingerprint information is presented in the fingerprint database, perform the predetermined associated operation according to a combination of the fingerprint information and the holding manner of the current mobile terminal.

As described above, the fingerprint information identifying module 21 may perform fingerprint identifying operation in one of a screen on state, a standby screen off state, an unlocked state, and a locked state; and when the operation executing module 23 performs the operation in the standby screen off state, the operation executing module 23 lights up a screen first, and then performs the predetermined associated operation according to the combination of the fingerprint information and the holding manner of the current mobile terminal.

When the operation associated with the fingerprint template is an APP, the operation executing module 23 is configured to, upon identifying that a fingerprint template matching with the input fingerprint information is presented in the fingerprint database, start the associated APP according to the combination of the fingerprint information and the holding manner of the current mobile terminal.

When the operation associated with the fingerprint template is a dialup application, the operation executing module 23 is configured to, upon identifying that a fingerprint template matching with the input fingerprint information is presented in the fingerprint database, dial a corresponding telephone number according to the combination of the fingerprint information and the holding manner of the current mobile terminal.

When the operation associated with the fingerprint template is an operating system, the operation executing module 23 is configured to, upon identifying that a fingerprint template matching with the input fingerprint information is presented in the fingerprint database, start a corresponding operating system or ROM according to the combination of the fingerprint information and the holding manner of the current mobile terminal.

When the operation associated with the fingerprint template is a system subject application, the operation executing module 23 is configured to, upon identifying that a fingerprint template matching with the input fingerprint information is presented in the fingerprint database, load the associated system subject information according to the combination of the fingerprint information and the holding manner of the current mobile terminal.

In conclusion, in the present disclosure, a plurality of operation results are proposed according to the actual usage scenario of the user based on the fingerprint identification, thereby improving the convenience, quickness and security performance of the mobile phone.

It is understandable to those skilled in the art that all or partial steps of the method described in the above embodiments can be implemented by controlling relevant hardware by programs. The programs may be stored in a computer readable storage medium. The storage medium may be a read only memory (ROM), random access memory (RAM), a magnetic disk or a compact disc read-only memory (CD-ROM).

The above descriptions are merely preferred embodiments of the present disclosure, but not intended to limit the present disclosure. Any modification, equivalent replacement, and improvement shall fall within the protection scope of the present disclosure.

### Industrial Applicability

In the present disclosure, a plurality of fingerprints are pre-registered as fingerprint templates, and a predetermined associated operation is performed according to a combination result of the fingerprint information and a holding manner of a current mobile terminal, for example, an application, a function, an interface, a style and a mode may be performed. In this way, no matter in a screen on state or a screen off state, the associated operation may all be started, such that a user may experience more convenient and quicker services. In the present disclosure, since various application operations are all associated with specific fingerprint information, the privacy is better protected.

## Claims

1. A method for processing input fingerprint information, comprising:
identifying, when scanning that fingerprint information is input, whether a fingerprint template matching with the input fingerprint information is presented in a fingerprint database, wherein the fingerprint database comprises a plurality of pre-registered fingerprint templates; and
performing, upon identifying that a fingerprint template matching with the fingerprint information is presented in the fingerprint database, a predetermined associated operation according to a combination of the fingerprint information and a holding manner of a current mobile terminal; wherein whether the holding manner of the mobile terminal is a lateral holding manner or a lengthways holding manner is determined according to information detected by an acceleration sensor or a gravity sensor of the mobile terminal.

2. The method for processing input fingerprint information according to claim 1, wherein the fingerprint identification step is performed in one of a screen on state, a standby screen off state, an unlocked state, and a locked state.

3. The method for processing input fingerprint information according to claim 2, wherein when the fingerprint identification step is performed in a standby screen off state, a screen is lit up first, and then the predetermined associated operation is performed according to the combination of the fingerprint information and the holding manner of the current mobile terminal.

4. The method for processing fingerprint information according to claim 3, wherein the predetermined associated operation comprises performing an application, a function, an interface, a style and a mode.

5. A mobile terminal for processing input fingerprint information, comprising:
a fingerprint database establishing module (21), configured to register fingerprint templates in a fingerprint database, and set a predetermined associated operation correlated with each fingerprint template;
a fingerprint information identifying module (22), configured to, when scanning that fingerprint information is input, identify whether a fingerprint template matching with the fingerprint information is presented in the fingerprint database;
an acceleration sensor or a gravity sensor; and
an operation executing module (23), configured to, upon identifying that a fingerprint template matching with the fingerprint information is presented in the fingerprint database, perform the predetermined associated operation according to a combination of the fingerprint information and a holding manner of the mobile terminal ; wherein whether the holding manner of the mobile terminal is a lateral holding manner or a lengthways holding manner is determined according to information detected by the acceleration sensor or the gravity sensor.

6. The mobile terminal for processing input fingerprint information according to claim 5, wherein the fingerprint information identifying module (22) performs the operation in one of a screen on state, a standby screen off state, an unlocked state, and a locked state.

7. The mobile terminal for processing input fingerprint information according to claim 6, wherein when the fingerprint information identifying module (22) performs fingerprint identifying operation in the standby screen off state, the operation executing module lights up a screen first, and then performs the predetermined associated operation according to the combination of the fingerprint information and the holding manner of the current mobile terminal.

8. The mobile terminal for processing fingerprint information according to claim 7, wherein the predetermined associated operation comprises performing an application, a function, an interface, a style and a mode.

## Patentansprüche

1. Verfahren zur Verarbeitung eingegebener Fingerabdruckinformationen, Folgendes umfassend:
Identifizieren, wenn abgetastet wird, dass Fingerabdruckinformationen eingegeben werden, ob eine mit den eingegebenen Fingerabdruckinformationen übereinstimmende Fingerabdruckvorlage in einer Fingerabdruckdatenbank vorhanden ist, wobei die Fingerabdruckdatenbank eine Vielzahl von vorab aufgezeichneten Fingerabdruckvorlagen umfasst; und
Durchführen, beim Identifizieren, dass eine mit den eingegebenen Fingerabdruckinformationen übereinstimmende Fingerabdruckvorlage in der Fingerabdruckdatenbank vorhanden ist, eines vorbestimmten dazugehörigen Vorgangs je nach einer Kombination aus den Fingerabdruckinformationen und einer Halteweise eines gegenwärtigen mobilen Endgeräts; wobei, ob es sich bei der Halteweise des mobilen Endgeräts um eine seitliche Halteweise oder eine Halteweise der Länge nach handelt, je nach Informationen bestimmt wird, die durch einen Beschleunigungssensor oder Schwerkraftsensor des mobilen Endgeräts erfasst werden.

2. Verfahren zur Verarbeitung eingegebener Fingerabdruckinformationen nach Anspruch 1, wobei der Fingerabdruckidentifikationsschritt in einem Bildschirmeinschaltzustand, in einem Bereitschaftsbildschirmausschaltzustand, einem entsperrten Zustand und/oder einem gesperrten Zustand erfolgt.

3. Verfahren zur Verarbeitung eingegebener Fingerabdruckinformationen nach Anspruch 2, wobei, wenn der Fingerabdruckidentifikationsschritt in einem Bereitschaftsbildschirmausschaltzustand erfolgt, zuerst ein Bildschirm aufleuchtet, und dann der vorbestimmte dazugehörige Vorgang je nach der Kombination aus den Fingerabdruckinformationen und der Halteweise des gegenwärtigen mobilen Endgeräts erfolgt.

4. Verfahren zur Verarbeitung von Fingerabdruckinformationen nach Anspruch 3, wobei der vorbestimmte dazugehörige Vorgang umfasst, eine Anwendung, eine Funktion, eine Schnittstelle, einen Stil und einen Modus ablaufen zu lassen.

5. Mobiles Endgerät zur Verarbeitung eingegebener Fingerabdruckinformationen, Folgendes umfassend:
ein Fingerabdruckdatenbankerstellungsmodul (21), das dazu konfiguriert ist, Fingerabdruckvorlagen in einer Fingerabdruckdatenbank aufzuzeichnen und einen vorbestimmten dazugehörigen Vorgang einzustellen, der mit jeder Fingerabdruckvorlage korreliert;
ein Fingerabdruckinformationsidentifizierungsmodul (22), das dazu konfiguriert ist, wenn abgetastet wird, dass Fingerabdruckinformationen eingegeben werden, zu identifizieren, ob eine mit den Fingerabdruckinformationen übereinstimmende Fingerabdruckvorlage in der Fingerabdruckdatenbank vorhanden ist;
einen Beschleunigungssensor oder einen Schwerkraftsensor; und
ein Vorgangsausführungsmodul (23), das dazu konfiguriert ist, auf das Identifizieren hin, dass eine mit den Fingerabdruckinformationen übereinstimmende Fingerabdruckvorlage in der Fingerabdruckdatenbank vorhanden ist, den vorbestimmten dazugehörigen Vorgang je nach einer Kombination aus den Fingerabdruckinformationen und einer Halteweise des mobilen Endgeräts durchzuführen; wobei, ob es sich bei der Halteweise des mobilen Endgeräts um eine seitliche Halteweise oder eine Halteweise der Länge nach handelt, je nach Informationen bestimmt wird, die durch den Beschleunigungssensor oder den Schwerkraftsensor erfasst werden.

6. Mobiles Endgerät zur Verarbeitung eingegebener Fingerabdruckinformationen nach Anspruch 5, wobei das Fingerabdruckinformationsidentifizierungsmodul (22) den Vorgang in einem Bildschirmeinschaltzustand, in einem Bereitschaftsbildschirmausschaltzustand, einem entsperrten Zustand und/oder einem gesperrten Zustand durchführt.

7. Mobiles Endgerät zur Verarbeitung eingegebener Fingerabdruckinformationen nach Anspruch 6, wobei, wenn das Fingerabdruckinformationsidentifizierungsmodul (22) den Fingerabdruckidentifizierungsvorgang im Bereitschaftsbildschirmausschaltzustand durchführt, das Vorgangsausführungsmodul zuerst einen Bildschirm aufleuchten lässt und dann den vorbestimmten dazugehörigen Vorgang je nach der Kombination aus den Fingerabdruckinformationen und der Halteweise des gegenwärtigen mobilen Endgeräts durchführt.

8. Mobiles Endgerät zur Verarbeitung von Fingerabdruckinformationen nach Anspruch 7, wobei der vorbestimmte dazugehörige Vorgang umfasst, eine Anwendung, eine Funktion, eine Schnittstelle, einen Stil und einen Modus ablaufen zu lassen.

## Revendications

1. Procédé de traitement d'informations d'empreintes digitales entrées, comprenant :
le fait d'identifier, lors de la détection que des informations d'empreintes digitales sont entrées, si un modèle d'empreintes digitales correspondant aux informations d'empreintes digitales entrées est présent dans une base de données d'empreintes digitales, sachant que la base de données d'empreintes digitales comprend une pluralité de modèles d'empreintes digitales préenregistrés ; et
l'exécution, lors de l'identification qu'un modèle d'empreintes digitales correspondant aux informations d'empreintes digitales est présent dans la base de données d'empreintes digitales, d'une opération associée prédéterminée conformément à une combinaison des informations d'empreintes digitales et d'une manière de tenue d'un terminal mobile actuel ; sachant que le fait de savoir si la manière de tenue du terminal mobile est une manière de tenue latérale ou une manière de tenue longitudinale est déterminé conformément à des informations détectées par un capteur d'accélération ou un capteur de gravité du terminal mobile.

2. Le procédé de traitement d'informations d'empreintes digitales entrées selon la revendication 1, sachant que l'étape d'identification d'empreintes digitales est effectuée dans l'un d'un état de marche d'écran, d'un état d'arrêt d'écran en veille, d'un état déverrouillé, et d'un état verrouillé.

3. Le procédé de traitement d'informations d'empreintes digitales entrées selon la revendication 2, sachant que lorsque l'étape d'identification d'empreintes digitales est effectuée dans un état d'arrêt d'écran en veille, un écran est d'abord allumé, puis l'opération associée prédéterminée est effectuée conformément à la combinaison des informations d'empreintes digitales et de la manière de tenue du terminal mobile actuel.

4. Le procédé de traitement d'informations d'empreintes digitales selon la revendication 3, sachant que l'opération associée prédéterminée comprend l'exécution d'une application, d'une fonction, d'une interface, d'un style et d'un mode.

5. Terminal mobile de traitement d'informations d'empreintes digitales entrées, comprenant :
un module d'établissement de base de données d'empreintes digitales (21), configuré pour enregistrer des modèles d'empreintes digitales dans une base de données d'empreintes digitales, et établir une opération associée prédéterminée corrélée à chaque modèle d'empreintes digitales ;
un module d'identification d'informations d'empreintes digitales (22), configuré pour, lors de la détection que des informations d'empreintes digitales sont entrées, identifier si un modèle d'empreintes digitales correspondant aux informations d'empreintes digitales est présent dans la base de données d'empreintes digitales ;
un capteur d'accélération ou un capteur de gravité ; et
un module d'exécution d'opération (23), configuré pour, lors de l'identification qu'un modèle d'empreintes digitales correspondant aux informations d'empreintes digitales est présent dans la base de données d'empreintes digitales, effectuer l'opération associée prédéterminée conformément à une combinaison des informations d'empreintes digitales et d'une manière de tenue du terminal mobile ; sachant que le fait de savoir si la manière de tenue du terminal mobile est une manière de tenue latérale ou une manière de tenue longitudinale est déterminé conformément à des informations détectées par le capteur d'accélération ou le capteur de gravité.

6. Le terminal mobile de traitement d'informations d'empreintes digitales entrées selon la revendication 5, sachant que le module d'identification d'informations d'empreintes digitales (22) effectue l'opération dans l'un d'un état de marche d'écran, d'un état d'arrêt d'écran en veille, d'un état déverrouillé, et d'un état verrouillé.

7. Le terminal mobile de traitement d'informations d'empreintes digitales entrées selon la revendication 6, sachant que lorsque le module d'identification d'informations d'empreintes digitales (22) effectue l'opération d'identification d'empreintes digitales dans l'état d'arrêt d'écran en veille, le module d'exécution d'opération allume d'abord un écran, puis effectue l'opération associée prédéterminée conformément à la combinaison des informations d'empreintes digitales et de la manière de tenue du terminal mobile actuel.

8. Le terminal mobile de traitement d'informations d'empreintes digitales selon la revendication 7, sachant que l'opération associée prédéterminée comprend l'exécution d'une application, d'une fonction, d'une interface, d'un style et d'un mode.
